# EUROPEAN PATENT APPLICATION

(11) **EP 4 354 802 A1**
(43) Date of publication of application: **17.04.2024**
(21) Application number: 22836604.3
(22) Date of filing: 13.05.2022
(51) Int. Cl.: H04L 12/00

(54) **QUERY METHOD, APPARATUS, AND DEVICE**

(30) Priority: 06.07.2021 CN 202110761856; 09.07.2021 CN 202110780864
(71) Applicant: Huawei Technologies Co., Ltd., Shenzhen, Guangdong 518129 (CN)
(72) Inventor: FENG, Chong, Shenzhen, Guangdong 518129 (CN); MA, Qiufang, Shenzhen, Guangdong 518129 (CN)
(74) Representative: MERH-IP Matias Erny Reichl Hoffmann Patentanwälte PartG mbB
(86) International application number: PCT/CN2022/092742
(87) International publication number: WO 2023/279848

(57) **Abstract**

Embodiments of this application disclose a query method and apparatus, and a device, so that a network management device obtains a situation in which a YANG model object on a network device is licensed. The method includes: The network management device generates a query message, where the query message includes a query condition, and the query condition is used to determine a first mapping relationship between license information and information about a YANG model object. The network management device sends the query message to a first device. The network management device receives a response message obtained by the first device based on the query condition, where the response message includes the first mapping relationship.

## Description

This application claims priority to Chinese Patent Application No. 202110761856.0, filed with the China National Intellectual Property Administration on July 6, 2021 and entitled "METHOD, DEVICE, AND SYSTEM FOR EXPRESSING CONTROL RELATIONSHIP", which is incorporated herein by reference in its entirety; and claims priority to Chinese Patent Application No. 202110780864.X, filed with the China National Intellectual Property Administration on July 9, 2021 and entitled "QUERY METHOD AND APPARATUS, AND DEVICE", which is incorporated herein by reference in its entirety.

### TECHNICAL FIELD

This application relates to the communication field, and in particular, to a query method and apparatus, and a device.

### BACKGROUND

A network configuration protocol (Network Configuration Protocol, NETCONF) provides a mechanism for communication between a network management device and a network device. Based on the mechanism, a user can trigger, on the network management device, instructions for adding, modifying, or deleting configuration data on the network device, and obtain the configuration data on the network device and status information.

A license (license) is a contract granted by a supplier/granted to a user for an application scope, a validity period, and the like of a sold/purchased software product. With the license, the user can obtain a corresponding service promised by the supplier. That is, the user may use a function corresponding to the network device, and has rights of performing the foregoing processing on the configuration data on the network device or obtaining the status information. If learning of a situation in which the function corresponding to the network device is licensed, the network management device can perform further processing. This improves user experience.

### SUMMARY

Embodiments of this application provide a query method and apparatus, and a device, so that a network management device obtains a situation in which a YANG model object on a network device is licensed.

According to a first aspect, a query method is provided. The method may be applied to a network management device on which a NETCONF client is deployed. The method includes the following steps: The network management device generates a query message, where the query message includes a query condition, and the query condition is used to determine a first mapping relationship between license (license) information and information about a YANG model object. The license information may include a license name. Optionally, the license information may further include one or more of a license revision and license enable information. The YANG model object may include one or more of a YANG data packet (package), a module set (module set), a module (module), and a data node (data node). The information about the YANG model object may include an identifier of the YANG model object. Optionally, the information about the YANG model object may further include one or more of feature (feature) information and capability (capability) information of the YANG model object. After generating the query message, the network management device sends the query message to a first device, and receives a response message obtained by the first device based on the query condition, where the response message includes the first mapping relationship. In this embodiment of this application, the network management device sends the query message including the query condition to the first device, and receives the response message obtained by the first device based on the query message, so as to obtain the first mapping relationship that is between the license information and the information about the YANG model object and obtained by a network device based on the query condition. The network management device obtains a situation in which the YANG model object on the network device is licensed, and this lays a basis for the network management device to perform further processing, and improves user experience.

The query condition in the query message may be implemented in the following several possible manners:
Implementation 1: The query condition includes the license information, and the query message is used by the first device to obtain the corresponding information about the YANG model object based on the license information. The license information may indicate all licenses or a specific license. If the license information indicates all licenses, the response message obtained by the network management device may include information of YANG model objects corresponding to all the licenses; or if the license information indicates a specific license, the response message obtained by the network management device includes information of a YANG model object corresponding to the specific license. In this implementation, a license module may be added to a YANG model, and is specially configured to store the first mapping relationship.
Implementation 2: The query condition includes the information about the YANG model object, and the query message is used by the first device to obtain the license information based on the information about the YANG model object. In this implementation, an extension (extension) keyword of the YANG model object in a module may be extended, and the license information corresponding to the YANG model object is defined in the extension keyword; or an existing YANG package is extended, and the license information corresponding to the YANG model object is added to the YANG package.
Implementation 3: The query condition includes a first query instruction and an identifier of a data node, the first query instruction is used to query capability information of the data node in YANG model system capabilities (system-capabilities), and the capability information of the data node includes the first mapping relationship. In this implementation, an existing system-capabilities module of a YANG model needs to be extended to add license information of the data node. The license can control all or part of a capability of the data node.
Implementation 4: The query condition includes a second query instruction, the second query instruction is used to query a YANG library (library), and the YANG library includes the first mapping relationship. In this implementation, the existing YANG library needs to be extended, and the license information corresponding to the YANG model object needs to be added to the YANG library.
Implementation 5: The query condition includes a third query instruction, the third query instruction is used to query schema (schema) information of the YANG model, and the schema information includes the first mapping relationship. In this implementation, an existing YANG schema needs to be extended, and the license information corresponding to the YANG model object needs to be added to the YANG schema.
Implementation 6: The query condition includes a file name, and the query message is used by the first device to obtain the first mapping relationship from a file corresponding to the file name. A type of the file can be a YANG-instance-file (instance-file).
Implementation 7: The query condition includes a device identifier of a network device carrying the YANG model object, the query message is used by the first device to obtain the first mapping relationship based on the device identifier and a second mapping relationship, and the second mapping relationship is a correspondence between the device identifier and the first mapping relationship. The device identifier is used to uniquely identify the network device, for example, a router identifier (router identifier, router ID).
The query message in Implementation 1 to Implementation 5 may be a remote procedure call (Remote Procedure Call, RPC) message, and the response message may be an RPC reply message. The query message and the response message in Implementation 6 and Implementation 7 each may be a message based on a protocol such as a hypertext transfer protocol (HyperText Transfer Protocol, HTTP) or a file transfer protocol (File Transfer Protocol, FTP).

In this embodiment of this application, the query message may be generated based on user triggering, or may be generated based on event triggering.

In a possible design, the network management device generates the query message based on the license information in response to obtaining alarm information that a license indicated by the license information expires, so as to obtain the information about the YANG model object corresponding to the license for a user to make a reference or perform a subsequent step. For the query condition in the query message, refer to one or more of Implementation 1, Implementation 4, Implementation 7, and the like.

In another possible design, the network management device generates the query message in response to a case in which the network management device receives a remote procedure call RPC reply message, where the PRC reply message indicates that a reason why the network management device fails to configure the YANG model object includes that a license corresponding to the YANG model object is invalid, for a user to make a reference or perform a subsequent step. For example, in response to a case in which the license indicated by the license information is invalid, the network management device sends an activation instruction to the first device, where the activation instruction instructs to activate the license. For the query condition in the query message, refer to Implementation 2, Implementation 3, or the like.

In still another possible design, the network management device generates the query message in response to generating a PRC message, to query the license information corresponding to the YANG model object, where the RPC message is used to configure the YANG model object. After receiving the response message, the network management device may send the RPC message to the network device in response to a case in which a license indicated by the license information is in an activated state, so as to configure the YANG model object. For the query condition in the query message, refer to Implementation 2, Implementation 3, or the like.

According to a second aspect, a query method is provided, applied to a first device. The first device may be a server or a network device on which a YANG service end is deployed. The method includes the following steps: The first device receives a query message from a network device, where the query message includes a query condition. The first device obtains a first mapping relationship based on the query condition, where the first mapping relationship is a mapping relationship between license information and information about a YANG model object. For details about the license information and the information about the YANG model object, refer to the foregoing descriptions. Details are not described herein again. After obtaining the first mapping relationship, the first device sends a response message to the network device, where the response message includes the first mapping relationship. In this embodiment of this application, the first device receives the query message including the query condition, and sends, to the first device, the response message obtained based on the query message, so that a network management device obtains the first mapping relationship that is between the license information and the information about the YANG model object and obtained by the first device based on the query condition. The network management device obtains a situation in which the YANG model object on the network device is licensed, and this lays a basis for the network management device to perform further processing, and improves user experience.

For different query conditions, the first device obtains the first mapping relationship in different implementations.
Implementation 1: The query condition includes license information. That the first device obtains a first mapping relationship based on the query condition includes: The first device obtains the corresponding information about the YANG model object based on the license information.
Implementation 2: The query condition includes the information about the YANG model object. That the first device obtains a first mapping relationship based on the query condition includes: The first device obtains the license information based on the information about the YANG model object.
Implementation 3: The query condition includes a first query instruction and an identifier of a data node, and the first query instruction is used to query capability information of the data node in YANG model system capabilities system-capabilities.
That the first device obtains a first mapping relationship based on the query condition includes: The first device obtains the capability information of the data node in the YANG system-capabilities based on the first query instruction and the identifier of the data node, where the capability information of the data node includes the first mapping relationship.
Implementation 4: The query condition includes a second query instruction, and the second query instruction is used to query a YANG library library. That the first device obtains a first mapping relationship based on the query condition includes: The first device obtains the YANG library based on the second query instruction, where the YANG library includes the first mapping relationship.
Implementation 5: The query condition includes a third query instruction, and the third query instruction is used to query schema schema information of the YANG model. That the first device obtains a first mapping relationship based on the query condition includes: The first device obtains the schema information based on the third query instruction, where the schema information includes the first mapping relationship.
Implementation 6: The query condition includes a file name. That the first device obtains a first mapping relationship based on the query condition includes: The first device obtains the first mapping relationship from a file corresponding to the file name.
Implementation 7: The query condition includes a device identifier of a network device carrying the YANG model object. That the first device obtains a first mapping relationship based on the query condition includes: The first device obtains the first mapping relationship based on the device identifier and a second mapping relationship, where the second mapping relationship is a correspondence between the device identifier and the first mapping relationship.

According to a third aspect, a query apparatus is provided and applied to a network management device. The apparatus includes: a processing unit, configured to generate a query message, where the query message includes a query condition, and the query condition is used to determine a first mapping relationship between license license information and information about a YANG model object; a sending unit, configured to send the query message to a first device; and a receiving unit, configured to receive a response message obtained by the first device based on the query condition, where the response message includes the first mapping relationship.

In a possible design, the query condition includes the license information, and the query message is used by the first device to obtain the corresponding information about the YANG model object based on the license information.

In a possible design, the processing unit is configured to generate the query message based on the license information in response to obtaining alarm information that a license indicated by the license information expires.

In a possible design, the query condition includes the information about the YANG model object, and the query message is used by the first device to obtain the license information based on the information about the YANG model object.

In a possible design, the processing unit is configured to generate the query message in response to a case in which the network management device receives a remote procedure call RPC reply message, where the PRC reply message indicates that a reason why the network management device fails to configure the YANG model object includes that a license corresponding to the YANG model object is invalid.

In a possible design, the sending unit is further configured to: after receiving the response message, send an activation instruction to the first device in response to a case in which a license indicated by the license information is invalid, where the activation instruction instructs to activate the license.

In a possible design, the processing unit is configured to generate the query message in response to generating a PRC message, where the RPC message is used to configure the YANG model object.

In a possible design, the sending unit is further configured to: after receiving the response message, send the RPC message to the network device in response to a case in which a license indicated by the license information is in an activated state.

In a possible design, the information about the YANG model object includes an identifier of the YANG model object.

In a possible design, the information about the YANG model object further includes one or more of the following: feature feature information of the YANG model object and capability capability information of the YANG model object.

In a possible design, the query condition includes a first query instruction and an identifier of a data node, the first query instruction is used to query capability information of the data node in YANG model system capabilities system-capabilities, and the capability information of the data node includes the first mapping relationship.

In a possible design, the query condition includes a second query instruction, the second query instruction is used to query a YANG library library, and the YANG library includes the first mapping relationship.

In a possible design, the query condition includes a third query instruction, the third query instruction is used to query schema schema information of the YANG model, and the schema information includes the first mapping relationship.

In a possible design, the query condition includes a file name, and the query message is used by the first device to obtain the first mapping relationship from a file corresponding to the file name.

In a possible design, the query condition includes a device identifier of a network device carrying the YANG model object, the query message is used by the first device to obtain the first mapping relationship based on the device identifier and a second mapping relationship, and the second mapping relationship is a correspondence between the device identifier and the first mapping relationship.

According to a fourth aspect, a query apparatus is provided and applied to a first device. The apparatus includes: a receiving unit, configured to receive a query message from a network device, where the query message includes a query condition; a processing unit, configured to obtain a first mapping relationship based on the query condition, where the first mapping relationship is a first mapping relationship between license license information and information about a YANG model object; and a sending unit, configured to send a response message to the network device, where the response message includes the first mapping relationship.

In a possible design, the query condition includes the license information; and the processing unit is configured to obtain the corresponding information about the YANG model object based on the license information.

In a possible design, the query condition includes the information about the YANG model object; and the processing unit is configured to obtain the license information based on the information about the YANG model object.

In a possible design, the query condition includes a first query instruction and an identifier of a data node, and the first query instruction is used to query capability information of the data node in YANG model system capabilities system-capabilities; and the processing unit is configured to obtain the capability information of the data node in the YANG system-capabilities based on the first query instruction and the identifier of the data node, where the capability information of the data node includes the first mapping relationship.

In a possible design, the query condition includes a second query instruction, and the second query instruction is used to query a YANG library library; and the processing unit is configured to obtain the YANG library based on the second query instruction, where the YANG library includes the first mapping relationship.

In a possible design, the query condition includes a third query instruction, and the third query instruction is used to query schema schema information of the YANG model; and the processing unit is configured to obtain the schema information based on the third query instruction, where the schema information includes the first mapping relationship.

In a possible design, the query condition includes a file name; and the processing unit is configured to obtain the first mapping relationship from a file corresponding to the file name.

In a possible design, the query condition includes a device identifier of a network device carrying the YANG model object; and the processing unit is configured to obtain the first mapping relationship based on the device identifier and a second mapping relationship, where the second mapping relationship is a correspondence between the device identifier and the first mapping relationship.

According to a fifth aspect, a network management device is provided. The network device includes a processor chip and a memory, the memory is configured to store instructions or program code, and the processor chip is configured to invoke the instructions or the program code from the memory and run the instructions or the program code, to perform the query method according to the first aspect.

According to a sixth aspect, a device is provided. The device includes a processor chip and a memory, the memory is configured to store instructions or program code, and the processor chip is configured to invoke the instructions or the program code from the memory and run the instructions or the program code, to perform the query method according to the second aspect.

According to a seventh aspect, a computer-readable storage medium is provided. The computer-readable storage medium includes instructions, a program, or code, and when the instructions, the program, or the code is executed on a computer, the computer is enabled to perform the query method according to the first aspect or the second aspect.

### BRIEF DESCRIPTION OF DRAWINGS

FIG. 1 is a schematic diagram of a scenario of a network architecture to which a query method according to an embodiment of this application is applied;
FIG. 2 is a schematic flowchart of a query method according to an embodiment of this application;
FIG. 3 is a schematic diagram of a structure of a query apparatus 300 according to an embodiment of this application;
FIG. 4 is a schematic diagram of a structure of a query apparatus 400 according to an embodiment of this application;
FIG. 5 is a schematic diagram of a structure of a device 500 according to an embodiment of this application; and
FIG. 6 is a schematic diagram of a structure of a device 600 according to an embodiment of this application.

### DESCRIPTION OF EMBODIMENTS

Before a query method and a device provided in embodiments of this application are described, some related key terms are first described.
Yet Another Next Generation (YANG): is initially designed as a data modeling language for a NETCONF.
YANG model: is a data model established in a YANG data modeling language. The YANG model can be deployed between a NETCONF client and a server to define a data hierarchy for a NETCONF-based operation. Data instantiated by using the YANG model can be stored in an extensible markup language (Extensible Markup Language) or a JSON encoding format.
YANG model object: is an object in a YANG model, such as a YANG model set (module set), a module (module), a data node (data node), and a YANG data packet (package).
Module set: is a set of modules.
Module: defines a hierarchy of YANG model data and is used for a NETCONF-based operation. One module includes one or more data nodes. Hierarchical organization of these data nodes is modeled into a tree. Each data node has a name, a value, or a group of child nodes. Each data node can be uniquely identified.
Feature (feature): A feature name can define a mechanism for marking some functions of a model as conditional.
Capability (capability): is a description of a support or implementation of NETCONF-based features or mechanisms by a network management device, network device, a YANG model, or a data node in a YANG model.
YANG library (library): is an RFC 8525-defined method for a NETCONF client to obtain YANG modules and datastores currently used by a server.
Schema (schema): describes a data structure of YANG. The schema defines all managed data nodes on a network device, and a hierarchy, read and write attributes, and constraints between data nodes. In actual application scenarios, different suppliers can use different schemata.

For detailed descriptions of the foregoing nouns, refer to the provisions of the request for comments (Request For Comments, RFC) 7950, RFC 6241, RFC 8525, and RFC 8526. Details are not described herein.

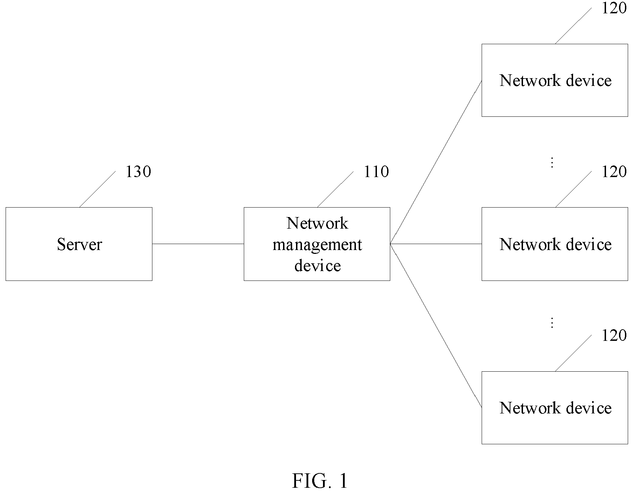

FIG. 1 is a schematic diagram of a scenario of a network architecture to which a query method according to an embodiment of this application is applied. In FIG. 1, the network architecture includes a network management device 110, one or more network devices 120, and a server 130. The network management device 110 is connected to each of the one or more network devices 120, and the network management device 110 may also be connected to the server 130.

The network management device 110 may send a remote procedure call (Remote Procedure Call, RPC) message to the network device 120. Likewise, the network device 120 may send an RPC reply (reply) message to the network management device 110 through a connection.

The network management device 110 may be a device such as a software-defined networking (Software-Defined Networking, SDN) controller. A NETCONF client (client) may be deployed on the network management device 110.

The network device 120 may be an entity device that supports a routing function, such as a router (router) or a switch (switch), or may be a server on which a virtual router or a virtual switch is deployed, or the like. A NETCONF server (server) may be deployed on the network device 120. A YANG model corresponding to each network device may be deployed on a NETCONF server corresponding to the network device 120.

A YANG model corresponding to each of the one or more network devices 120 may be deployed on the server 130, or may not be deployed.

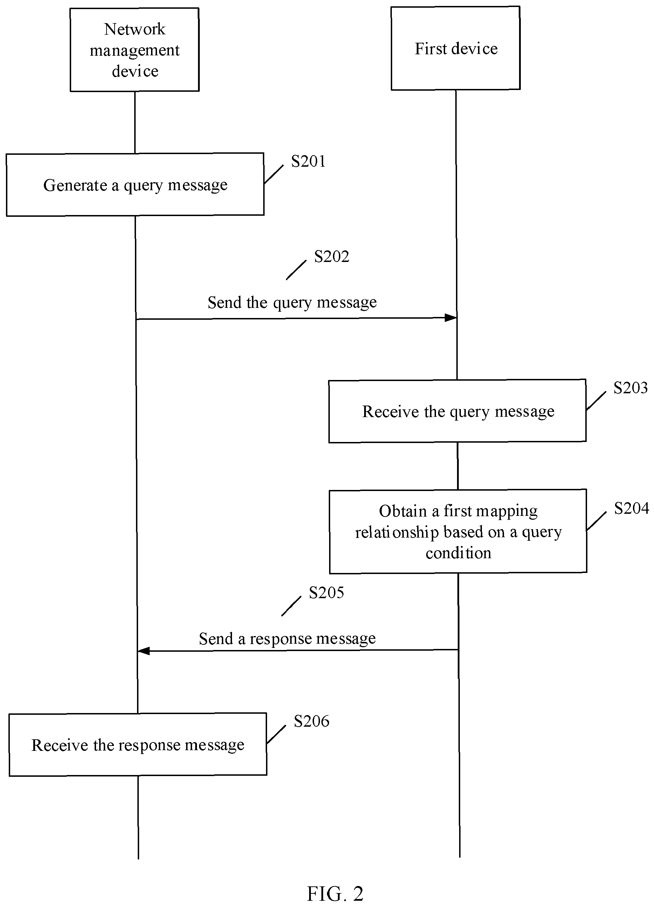

The following describes, with reference to FIG. 1 and FIG. 2, the query method and the device provided in embodiments of this application.

FIG. 2 is a schematic flowchart of a query method according to an embodiment of this application. The method includes the following steps.

S201: A network management device generates a query message.

In this embodiment of this application, the network management device may be, for example, the network management device 110 shown in FIG. 1.

The query message generated by the network management device includes a query condition, and the query condition is used to determine a first mapping relationship between license information and information about a YANG model object.

The license information may include a license name, and the license name is used to identify a license. In addition to the license name, optionally, the license information may further include one or more of a URL, a license revision, expiration time, license enable (enable) information, and the like. The license enable information indicates whether the license is in a valid state. For example, when the license is activated, the license is in the valid state; or when the license expires, the license is in an invalid state.

The YANG model object includes one or more of a YANG package, a module set, a module, and a data node. The information about the YANG model object may include an identifier of the YANG model object, for example, XML path (XML path, Xpath) information of the YANG model object. A mapping relationship between the license information and the identifier of the YANG model object may indicate whether a user is authorized to process the YANG model object, for example, deliver configuration data.

In addition to the identifier of the YANG model object, optionally, the information about the YANG model object may further include one or more of feature information of the YANG model object and capability information of the YANG model object.

The feature information may include one or more of a feature name, a feature type, and the like. The feature type may include a function type and a resource type. The function feature indicates that the feature represents a function, and a mapping relationship between function feature information and the license information may represent whether the user is authorized to use a function of a specific YANG model object in a network device. For example, the user can configure an SRv6 service only after activating a license corresponding to a segment routing version 6 (segment routing version 6, SRv6) function.

A mapping relationship between resource feature information and the license information indicates a quantity of resources that can be used by the user for a specific YANG model object on a network device. For example, a bandwidth of a port 0 on a switch is 100 Gbit/s. Before the license is activated, a bandwidth of the port 0 is limited to 50 Gbit/s. After the license is successfully activated, the port 0 has the bandwidth of 100 Gbit/s.

In this embodiment of this application, the query message generated for determining the first mapping relationship includes the query condition. In different scenarios, the query condition may have different implementations.

Scenario 1: The network management device queries a network device.

In this embodiment of this application, the network device may be the network device 120 in the embodiment shown in FIG. 1. In this scenario, the network device stores the first mapping relationship. Specifically, the first mapping relationship is instantiated and stored in a YANG model corresponding to the network device. The query message generated by the network management device may be an RPC message, and operations in the RPC message may include NETCONF protocol-based standard operations defined in RFC 6241 and RFC 8526, for example, a get (get) operation and a get-data (get-data) operation.

Based on this scenario, in a first possible implementation, the query condition may include the license information, and the query message is used by the first device to obtain the corresponding information about the YANG model object based on the license information.

In a second possible implementation, the query condition may include the information about the YANG model object, and the query message is used by the first device to obtain the license information based on the information about the YANG model object.

In a third possible implementation, the query condition includes a first query instruction and an identifier of a data node, the first query instruction is used to query capability information of the data node in YANG system-capabilities, and the capability information of the data node includes the first mapping relationship.

In a fourth possible implementation, the query condition includes a second query instruction, the second query instruction is used to query a YANG library (YANG library), and the YANG library includes the first mapping relationship.

In a fifth possible implementation, the query condition includes a third query instruction, the third query instruction is used to query schema (schema) information of the YANG model, and the schema information includes the first mapping relationship.

In a sixth possible implementation, the query condition includes a fourth query instruction, and the fourth query instruction is used to query a first mapping relationship between all license information in the YANG model and the information about the YANG model objects.

In addition to the standard operation, the fourth query instruction may also be a user-defined operation instruction, for example, an operation instruction for get-license-information (get-license-info).

A query request that includes the query condition in the foregoing possible implementations is described below by using an example. Details are not described herein again.

Scenario 2: The network management device queries a server.

In this embodiment of this application, the server may be the server 130 in FIG. 1. A YANG model corresponding to a network device may be deployed in the server, and a RESTCONF or a NETCONF server may be deployed. For example, a YANG model corresponding to the network device 120 is deployed in the server 130, or certainly may not be deployed. If the YANG model is deployed, the query message may be an RPC message. For the query condition, refer to a solution in the scenario where the network management device queries the network device. If YANG models corresponding to more than one network device are deployed in the server, the query condition may further include device identifiers, and the device identifiers are identifiers of the network devices, such as models or version information of the network devices.

If no YANG model is deployed in the server, but the first mapping relationship is stored in a form of a file, the query condition may include a file name, and the query message is used by the server to obtain the first mapping relationship from the file corresponding to the file name. In this scenario, the file type may be a YANG-instance-file (instance-file), and the YANG-instance-file is a standard format defined by the Internet Engineering Task Force (The Internet Engineering Task Force, IETF) Network Modeling (network modeling, netmod) Working Group for storing YANG model data. The query message may be a message based on a protocol such as a hypertext transfer protocol (HyperText Transfer Protocol, HTTP) or a file transfer protocol (File Transfer Protocol, FTP).

If the server stores files of more than one network device, optionally, the query condition may further include a device identifier, and the server may determine a corresponding file based on the device identifier and a file name, to obtain the first mapping relationship from the file.

Alternatively, the query condition may include only a device identifier, the server stores a second mapping relationship, and the second mapping relationship is a correspondence between the device identifier and the first mapping relationship. The query message is used by the server to obtain the first mapping relationship based on the second mapping relationship and the device identifier.

Possible implementations of the foregoing query manners do not constitute a limitation on the technical solutions of this application, and persons skilled in the art may design an implementation based on an actual situation. For example, before establishing a NETCONF connection to the network device, the network management device may obtain, based on a protocol such as an HTTP or an FTP, the first mapping relationship from a file stored in the network device.

In addition, in some examples, the network management device may generate the query message based on a trigger operation of the user. For example, when the user wants to query the first mapping relationship on the network device, the network management device may receive the trigger operation of the user in an interaction interface provided for the user, and generate the query message based on the trigger operation.

In some other examples, the network management device may trigger, when some events occur, generation of the query message.

For example, when a license is about to expire or has expired, the network management device may receive alarm information from the network device, and in response to receiving the alarm information, the network device may generate the query message based on the alarm information, to obtain the information about the YANG model object corresponding to the license, for the user to make a reference or perform a subsequent step.

Specifically, in response to obtaining the alarm information that a license indicated by the license information expires, the network management device generates the query message based on the license information, where the query condition in the query message may include the license information, and the query condition is used to obtain the corresponding information about the YANG model object based on the license information.

For another example, when the network management device fails to configure the YANG model object corresponding to the network device, the network device may return, to the network management device, a reason why the configuration fails. When the reason includes that a license corresponding to the YANG model object is invalid, the network management device may generate the query message based on the information about the YANG model object, where the query condition in the query message includes the information about the YANG model object, and the query condition is used to obtain the corresponding license information based on the information about the YANG model object, for the user to make a reference or perform a subsequent step, for example, deliver an instruction for activating the license.

Specifically, in response to a case in which the network management device receives an RPC reply message, the network management device generates the query message, where the PRC reply message indicates that the reason why the network management device fails to configure the YANG model object includes that the license corresponding to the YANG model object is invalid.

For still another example, before the network management device configures the YANG model object corresponding to the network device, the network management device may generate the query message to query the license information corresponding to the YANG model object. When the license corresponding to the YANG model object is in an activated state, it may be considered that the network management device can configure the YANG model object. Specifically, in response to generating an RPC message, the network management device generates the query message, where the RPC message is used to configure the YANG model object.

S202: The network management device sends the query message to the first device.

In this embodiment of this application, the first device may be the network device or the server mentioned above.

S203: The first device receives the query message from the network device.

S204: The first device obtains the first mapping relationship based on the query condition.

It can be learned from the foregoing that, for different query conditions, manners in which the first device queries the first mapping relationship are different.

When the query condition includes the license information, the first device searches for the corresponding information about the YANG model object based on the license information, where the first mapping relationship is a mapping relationship between the specific license information and the corresponding information about the YANG model.

When the query condition includes the information of the specific YANG model object, the first device searches for the corresponding license information based on the information of the specific YANG model object, where the first mapping relationship is a mapping relationship between the information of the specific YANG model object and the corresponding license information.

When the query condition includes the first query instruction, namely, an instruction for querying the YANG model system-capabilities, the first device queries the YANG system-capabilities based on the first query instruction, and obtains the first mapping relationship between YANG capability information and the corresponding license information from the YANG system-capabilities.

When the query condition includes the second query instruction, namely, an instruction for querying the YANG library, the first device queries the YANG library based on the second query instruction, and obtains the first mapping relationship between the information about the YANG model object and the corresponding license information from the YANG library.

When the query condition includes the third query instruction, that is, is used to query the schema information of the YANG model, the first device obtains the first mapping relationship between the information about the YANG model object and the corresponding license information from the schema information based on the third query instruction.

When the query condition includes the fourth query instruction, namely, an instruction for querying all license information and information about YANG model objects in the YANG model, the first device may query, based on the query instruction, a YANG model object whose root node is a license, and obtain the first mapping relationship between the license information and the information about the YANG model object from a child node under the root node.

It should be noted that the foregoing implementations of querying the first mapping relationship do not constitute a limitation on the technical solutions in this embodiment of this application, and persons skilled in the art may design an implementation based on an actual situation.

S205: The first device sends a response message to the network device, where the response message includes the first mapping relationship.

In this embodiment of this application, if the query message is the RPC message, the response message may be the RPC reply message. If the query message is the message based on the HTTP or the FTP, the response message is also a message based on the HTTP or the FTP.

The query message and the response message are further described below by using examples. Details are not described herein again.

S206: The network management device receives the response message from the first device.

After receiving the response message, the network management device may obtain the first mapping relationship from the response message. Optionally, the network management device may perform corresponding processing based on the first mapping relationship.

For example, as mentioned above, when the network management device fails to configure the YANG model object, and the network device returns the reason why the configuration fails is that the license is invalid, the network management device may generate the query message based on the information about the YANG model object, so as to obtain the license information corresponding to the YANG model object. When the response message received by the network management device includes the license information, in response to a case in which the license indicated by the license information is invalid, the network management device sends the activation instruction to the first device, where the activation instruction instructs to activate the license, so as to configure the YANG model object corresponding to the license.

For another example, before the network management device configures the YANG model object, the network management device may query the license information corresponding to the YANG model object based on the query message. In response to a case in which the license indicated by the license information in the response message is in the activated state, the network management device may send, to the network management device, the RPC message for configuring the YANG model object, so as to configure the YANG model object. If the license indicated by the license information in the response message is in an invalid state, the network management device may not send, to the network device, the RPC message for configuring the YANG model object, but may prompt the user to purchase the license, or send the activation instruction to the network device, where the activation instruction is used to activate the license. After the license is activated, the network management device sends the RPC message to the network device.

In conclusion, in this embodiment of this application, the network management device sends the query message including the query condition to the first device, and receives the response message obtained by the first device based on the query message, so as to obtain the first mapping relationship that is between the license information and the information about the YANG model object and obtained by the first device based on the query condition. The network management device obtains a situation in which the YANG model object on the network device is licensed, and this lays a basis for the network management device to perform further processing, and improves user experience.

The following describes, with reference to some examples, the query message and the response message provided in this embodiment of this application.

Implementation 1: The first device defines a new YANG module, namely, a YANG license module. The module is represented in a tree structure, a root node is a license, and the child node includes the mapping relationship between all license information in the network device and the information about the YANG model objects.

The following is an example of the tree structure of the YANG license module:

```
         module: AAA-license
           +--ro license
              +--ro license-items
                  +--ro license-item [name]
                     +--ro name
                     +--ro description
                     +--ro expired-date
                     +--ro enable
                     +--ro module-set [name]
                     | +--ro name
                     | +--ro module* [name]
                     | +--ro name
                     | +--ro revision
                     +--ro features
                        +--ro feature* [module-name, name]
                           +--ro module-name
                           +--ro name
                           +--ro type
                           +--ro value
                           +--ro data-node-path
```

In the tree structure, the root node is an AAA-license. That is, a name of the license module is the AAA-license. All content in the tree structure can be read-only by the user and cannot be modified. The license module includes one or more license-items (license-items). Each license-item has a corresponding name (name), which is used as a unique identifier of the license item. A license-item name may be a character string (string). A license-item is in a linked list structure. Each element in a child node of the license-item is a structure of the linked list structure. The license-item name is a key value in the linked list structure. In addition to the license-item name, optionally, the license-item may further include one or more of description (description) information of the license-item, an expired-date (expired-date) of the license-item, and an enable-status (enable-status), where the enable-status indicates whether the license-item is currently enabled on the device.

A child node of each license-item includes information about the YANG model object corresponding to the license, specifically including a name of a module set that can be enabled after the license-item is activated, a name of a module included in the module set, a revision (revision) of the module, a name of a feature associated with the license-item, a name of the yang module associated with the feature, a feature type, a value (value) of a resource feature, and Xpath information of a data node that can be affected by the feature. The module name is in a linked list structure.

When the query condition includes the license information or the fourth query instruction, the first mapping relationship may be obtained by querying the tree structure.

For example, when the query condition includes the fourth query instruction, and the fourth query instruction is used to query the first mapping relationship between all the license information in the YANG model and the information about the YANG model objects, the query message M1 may be as follows:

```
         <rpc message-id="101"
             xmlns="urn:ietf:params:xml:ns:NETCONF:base:1.0">
             <get>
                <filter type="subtree">
                   <license xmlns="urn:AAA:yang: AAA-license">
                </filter>
              </get>
            </rpc>
```

The query message M1 is an RPC message, and an identifier of the message is 101. AAA:yang: AAA-license is information of a root node to be queried. After receiving the query message M1, the network device queries the YANG model whose root node is the AAA-license, and returns an RPC reply message R1 including the first mapping relationship between all the license information in the YANG model and the information about the YANG model objects. The following is an example of the RPC reply message R1:

```
         <rpc-reply message-id="101"
             xmlns="urn:ietf:params:xml:ns:NETCONF:base:1.0">
             <data xmlns="um:ietf:params:xml:ns:yang:ietf-NETCONF-nmda">
                  <license xmlns="urn:AAA:yang:AAA-license">
                      <license-items>
                          <license-item>
                               <name>dhcpv6</name>
                               <description>Dynamic Host Configuration
Protocol for IPv6</description>
                               <enable>enable</enable>
                               <module-set>
                                   <name>dhcpv6</name>
                                   <module>
                                       <name>AAA-dhcpv6</name>
                                       <revision>2020-03 -09</revision>
                                   </module>
                                   <module>
                                       <name>AAA-dhcpv6-relay</name>
                                       <revision>2020-03 -09</revision>
                                   </module>
                                <module>
                                       <name>AAA-dhcpv6-deviations</name>
                                       <revision>2020-03 -08</revision>
                                   </module>
                               </module-set>
                          </license-item>
                          <license-item>
                               <name>evpn</name>
                               <description>evpn attributes</description>
                               <enable>disable</enable>
                               <features>
                                   <feature>
                                       <module-name>ietf-ethemet-segment</module-name>
                                       <name>ethernet-segment-pbb-params</name>
                                       <type>function</type>
<data-node-path>Ethernet-
                                       segments/Ethemet-segment/pbb-parameters</data-node-path>
                                   </feature>
                               </features>
                          </license-item>
                          <license-item>
                               <name>ospfv3</name>
                               <description>Configure OSPFv3 config</description>
                               <expired-date>2022-06-16</expired-date>
                               <enable>enable</enable>
                               <module-set>
                                   <name>ospfv3</name>
                                   <module>
                                       <name>AAA-ospfv3</name>
                                       <revision>2020-03 -13 </revision>
                                   </module>
                                   <module>
                                       <name>AAA-ospiv3 -type</name>
                                       <revision>2020-03 -09</revision>
                                   </module>
                                   <module>
                                       <name>AAA-ospiv3 -srv6</name>
                                       <revision>2020-03 -09</revision>
                                   </module>
                                <module>
                                       <name>AAA-ospfv3 -deviations</name>
                                       <revision>2020-03 -09</revision>
                                   </module>
                               </module-set>
                          </license-item>
                      </license-items>
                  </license>
             </data>
         </rpc-reply>
```

In the RPC reply message R1, a total of three licenses are included and respectively named a dynamic host configuration protocol version 6 (Dynamic Host Configuration Protocol version 6, DHCPV6), an Ethernet virtual private network (Ethernet Virtual Private Network, evpn), and an open shortest path first version 3 (Open Shortest Path First version 3, OSPF3).

Description information of a license named dhcpv6 is a dynamic host configuration protocol for internet protocol version 6 (Internet Protocol version 6, IPv6). The license named dhcpv6 is enabled on the network device. A name of a module set enabled by the license named dhcpv6 is dhcpv6. The module set named dhcpv6 includes the following modules: a module whose name is AAA-dhcpv6 and whose revision is 2020-03-09, a module whose name is AAA-dhcpv6-relay and whose revision is 2020-03-09, and a module whose name is AAA-dhcpv6-deviations and whose revision is 2020-03-08.

Description information of a license named evpn is an evpn attribute. The license is enabled on the network device. A name of a feature that can be enabled by the license is ethernet-segment-pbb-params, and a feature type is a function (function) type. The feature is related to a module named ietf ethernet-segment. Xpath information of a data node controlled by the feature is Ethernet-segments/Ethernet-segment/pbb-parameters.

Description information of a license named ospfv3 is Configure OSPFv3 config. An expired date of the license is 2022-06-16. A name of a module set that can be enabled by the license is ospfv3. The module set includes the following modules: a module whose name is AAA-ospfv3 and whose revision is 2020-03-13, a module whose name is AAA-ospfv3-type and whose revision is 2020-03-09, and a module whose name is AAA-ospfv3-srv6 and whose revision is 2020-03-09. The license can also enable a module whose name is AAA-ospfv3-deviations and whose revision is 2020-03-09.

Implementation 2: The first device may extend an existing YANG library, and store the mapping relationship between the license information and the information about the YANG model object in the YANG library.

An example of a tree structure of the extended YANG library is as follows:

```
         module: ietf-yang-library
              +--ro yang-library
                  +--ro module-set* [name]
                  | +--ro name
                  | +--ro license-name
                  | +--ro module* [name]
                  | | +--ro name
                  | | +--ro revision
                  | | +--ro namespace
                  | | +--ro license-name
                  | | +--ro location
                  | | +--ro submodule [name]
                  | | | +--ro name
                  | | | +--ro revision
                  | | | +--ro location
                  | | +--ro feature
                  | | +--ro license-controlled-feature* [feature-name]
                  | +--ro feature-name
                  | +--ro license-name
                  | +-ro data-node-paths
                  | | +--ro deviation
                  | +--ro import-only-module [name revision]
                  | +--ro name
                  | +--ro revision
                  | +--ro namespace
                  | +--ro location
                  | +--ro submodule* [name]
                  | +--ro name
                  | +--ro revision
                  | +--ro location
                  +--ro schema* [name]
                  | +--ro name
                  | +--ro module-set
                  +--ro datastore* [name]
                  | +--ro name
                  | +--ro schema
                  +--ro content-id
```

A module of the YANG library includes a module set, a schema, and a datastore (datastore). The module set includes a name of the module set, a name of a module included in the module set, a revision, a namespace (namespace), a location (location), a name of a submodule (submodule), a revision of the submodule, a location of the submodule, a feature, and a deviation (deviation). If the entire module set is controlled by the license, the module set also includes a license name. All modules in the module set are controlled by the license. If a module is controlled by a license, the module also contains a license name. If some features of a module are controlled by a license, the features of the module also include names of the features controlled by the license, XPath information of a data node that can be enabled by the features, and a name of the license.

Correspondingly, the query condition in the query message may include the second query instruction, and the second query instruction is used to query the YANG library. An example of the query message M2 is as follows:

```
         <rpc message-id="101"
                  xmlns="urn:ietf:params:xml:ns:NETCONF:base:1.0">
              <get-data xmlns="um:ietf:params:xml:ns:yang:ietf-NETCONF-nmda"
                         xmlns:ds="urn:ietf:params:xml:ns:yang:ietf-datastores">
                <datastore>ds: operational</datastore>
                <subtree-filter>
                  <yang-library xmlns="um:ietf:params:xml:ns:yang:ietf-yang-library">
                </subtree-filter>
              </get-data>
            </rpc>
```

An example of a response message R2 for the query message M2 is as follows:

```
         <rpc-reply message-id="101"
                  xmlns="urn:ietf:params:xml:ns:NETCONF:base:1.0">
              <data xmlns="um:ietf:params:xml:ns:yang:ietf-NETCONF-nmda">
            <yang-library
                xmlns="urn:ietf:params:xml:ns:yang:ietf-yang-library"
                xmlns:ds="um:ietf:params:xml:ns:yang:ietf-datastores"
                xmlns:ex-ds-eph="um:example:ds-ephemeral">
              <module-set>
                <name>config-state-modules</name>
                <module>
                   <name>ietf-interfaces</name>
                   <revision>2018-02-20</revision>
                   <namespace>
                     urn:ietf:params:xml:ns:yang:ietf-interfaces
                   </namespace>
                </module>
                <module>
                   <name>ietf-ip</name>
                   <revision>2018-02-22</revision>
                   <license-name>ipv6-license</license-name>
                   <namespace>
                     urn:ietf:params:xml:ns:yang:ietf-ip
                   </namespace>
                </module>
                <module>
                   <name>ietf-routing</name>
                   <revision>2018-03-13</revision>
                   <namespace>
                     urn:ietf:params:xml:ns:yang:ietf-routing
                   </namespace>
                </module>
                <import-only-module>
                   <name>ietf-yang-types</name>
                   <revision>2013-07-15</revision>
                   <namespace>
                     urn:ietf:params:xml:ns:yang:ietf-yang-types
                   </namespace>
                </import-only-module>
                <import-only-module>
                   <name>ietf-inet-types</name>
                   <revision>2013 -07- 15</revision>
                   <namespace>
                     um:ietf:params:xml:ns:yang:ietf-inet-types
                   </namespace>
                </import-only-module>
              </module-set>
              <module-set>
                <name>dynamic-config-state-modules</name>
                <license-name>config-state-modules</license-name>
                <module>
                   <name>ietf-network</name>
                   <revision>2018-02-26</revision>
                   <namespace>
                     urn:ietf:params:xml:ns:yang:ietf-network
                   </namespace>
                </module>
                <module>
                   <name>ietf-network-topology</name>
                   <revision>2018-02-26</revision>
                   <namespace>
                     urn:ietf:params :xml: ns :yang:ietf-network -topology
                   </namespace>
                </module>
              </module-set>
              <module-set>
                <name>state-only-modules</name>
                <module>
                   <name>ietf-hardware</name>
                   <revision>2018-03-13</revision>
                   <namespace>
                     urn:ietf:params:xml:ns:yang:ietf-hardware
                   </namespace>
                   <deviation>example-vendor-hardware-deviations</deviation>
                </module>
                <module>
                   <name>ietf-routing</name>
                   <revision>2018-03-13</revision>
                   <namespace>
                     um:ietf :params :xml: ns :y ang: ietf-routing
                   </namespace>
                   <feature>multiple-ribs</feature>
                   <feature>router-id</feature>
                   <license-controlled-feature>
                      <feature-name>multiple-ribs</feature-name>
                      <license-name>multiple-ribs-license</license-name>
                      <data-node-path>routing/ribs/rib/default-rib</data-node-path>
                   </license-controlled-feature>
                </module>
              </module-set>
            </yang-library>
              </data>
            </rpc-reply>
```

In the response message R2, three module sets are included and respectively named config-state-modules, dynamic-config-state-modules, and state-only-modules. In a module set named config-state-modules, a license named ipv6-license is used to enable a module whose name is ietf-ip and whose revision is 2018-02-22. For a module set named dynamic-config-state-modules, a license named config-state-modules is used to enable all modules in the module set, including a module whose name is ietf-network and whose revision is 2018-02-26 and a module whose name is ietf-network-topology and whose revision is 2018-02-26. In a module set named state-only-modules, a license is used to enable a feature named multiple-ribs in a module named ietf-routing. A name of the license is multiple-ribs-license. Xpath information of a data node controlled by the license is routing/ribs/rib/default-rib.

Implementation 3: The first device extends an existing YANG package, and stores the mapping relationship between the license information and the information about the YANG model object in the YANG package. A tree structure, a query message, and a response message of the extended YANG package are similar to those of the YANG library, and are not described herein again.

Implementation 4: The first device extends an existing system-capabilities module, and stores the mapping relationship between the license information and the information about the YANG model object in the system-capabilities module.

An ietf-system-capabilities module is a YANG-related capability mechanism defined by the Internet Engineering Task Force (The Internet Engineering Task Force, IETF) NETCONF Working Group for a discovering device. The system-capabilities module can store a capability of a single data node. In this embodiment of this application, the capability of the single data node is extended, and a mapping relationship between capability information of the single data node and the license information is added.

A tree structure of the system-capabilities module is as follows:

```
         module: ietf-system-capabilities
            +--ro system-capabilities
               +--ro datastore-capabilities* [datastore]
                   +--ro datastore
                   +--ro per-node-capabilities
                      +--ro (node-selection)
                         +--:(node-selector)
                             +--ro node-selector
                             +--ro license-name
                             +--ro description
```

A name of a root node of the system-capabilities module is system-capabilities, and a child node of the root node describes a capability of each datastore and a capability of each data node in each datastore in a list (list) structure. The system-capabilities module also includes a name of a license corresponding to a specific data node controlled by the license and related description information.

Based on the system-capabilities module, the query condition in the query message may include the first query instruction for querying the YANG system-capabilities. An example of the query message M3 is as follows:

```
         <rpc message-id="101" xmlns="urn:ietf:params:xml:ns:NETCONF:base: 1.0">
            <get>
              <filter type="subtree">
              <system-capabilities xmlns="um:ietf:params:xml:
ns:yang:ietf-system-capabilities"></system-
              capabilities>
               <datastore-capabilities>
                  <datastore>ds:operational</datastore>
                  <per-node-capabilities>
                     <node-selector>ABCD</node-selector>
                  </per-node-capabilities>
               </datastore-capabilities>
              </system-capabilities>
             </filter>
            </get>
         </rpc>
```

The query message M3 may use a standard get operation of the NETCONF protocol defined in RFC 6241, and the query condition may include a name ds:operational of a datastore and a name ABCD of a data node.

An example of a response message R3 for the query message M3 is as follows:

```
         <rpc-reply message-id="101" xmlns="urn:ietf:params:xml:ns:NETCONF:base:1.0">
           <data>
           <system-capabilities xmlns="um:ietf:params:xml:ns:yang:ietf-system-capabilities"
           xmlns :ds= "urn: ietf:params: xml: ns :yang:ietf-datastores ">
             <datastore-capabilities>
               <datastore>ds:operational</datastore>
               <per-node-capabilities>
                  <node-selector> ABCD </node-selector>
                  <license-name>12345</license-name>
                    <description> current maximize
value is 128kb (default 512kb) because of an unpurchased
                    license</description>
               </per-node-capabilities>
             </datastore-capabilities>
           </system-capabilities>
         </data>
         </rpc-reply>
```

In the response message R3, the data node named ABCD is controlled by a license named 12345. The license has the following description information: Current maximize value is 128 KB because of an unpurchased license.

Implementation 5: The first device may extend a YANG module, and define the first mapping relationship in an extension (extension) keyword of the YANG module.

RFC 7950 defines use of the "extension" keyword. Extension allows a new keyword expression to be defined in YANG, and the new keyword expression can be loaded and used by another YANG module. A parameter of an extension statement is an identifier, is used as a keyword of an extension definition, and is followed by a sub-statement block including detailed extension information. In this embodiment of this application, the extension extension keyword license-type indicates that a feature in the YANG module is controlled by a license. The license-type may be functional (functional) or numeric (numeric), where functional indicates that the data node is controlled by a function-limited license, and numeric indicates that the node is controlled by a resource-limited license. The license-type is used to modify the feature.

In addition, the YANG module needs to dynamically express a control relationship of the license to the data node. For example, if the license is enabled, the data node can be configured; or if the license is disabled, the data node cannot be configured for the user. A "feature" keyword defined in RFC 7950 can mark some data nodes in the YANG module as conditional. An expression if-feature is used for specification. If a feature is not enabled, data nodes controlled by the if-feature expression are not supported by the network device. However, if-feature can be used to represent only a function license. In this embodiment of this application, a YANG extension extension keyword apply-feature is used for a resource license. Apply-feature is used to modify a data node controlled by a resource feature.

Extension of license-type may be defined as follows:

```
         extension license-type {
             argument value;
             description "The options are as follows:
              1. functional: switch type license
              2. numeric: resource type license";
```

}The data node specified by the license-type indicates that the feature is controlled by the license, functional indicates a functional feature, and numeric indicates a resource feature.

Extension of apply-feature is defined as follows:

```
         extension apply-feature {
             argument value;
             description "This extension is used to tie
the schema nodes to the numeric license feature type";
```

}Apply-feature indicates that the data node is controlled by the resource feature. Apply-feature corresponds to one operation (operation). The operation can be replacing (replace), adding (add), or deleting (delete). Add indicates adding a new attribute to a target data node; replace indicates replacing an attribute of the target data node; delete indicates deleting an attribute of the target data node, and the attribute to be deleted is identified by a "delete" sub-statement.

It is assumed that a functional feature bevpn can be enabled by the license. The bevpn feature is defined as follows:

```
         feature bevpn {
                  ext:license-type functional;
             }
```

A relationship between the feature and a corresponding YANG data node is as follows:

```
              leaf evpn-type {
                  type enumeration {
                      enum normal;
                      enum bevpn {if-feature bevpn; } } }
```

It is assumed that a YANG data node network-instance of a VPN (a structure is a list) is a license-controlled resource type. If the license is not activated, a maximum of 50 list entries are supported by default; or if the license is activated, a maximum of 200 entries are supported. A resource feature max-vpn-instances is defined as follows:

```
         feature max-vpn-instances {
                  ext:license-type numeric;
             }
```

A relationship between the feature and a corresponding network-instance data node is as follows:

```
             list network-instance {
                  ext:apply-feature max-vpn-instances {
                      replace max-elements 200 } }
```

The query condition in the query message may include the third query instruction, where the third query instruction is used to query the schema schema information of the YANG model, and the schema information includes the first mapping relationship. The third query instruction may be a get schema operation.

An example of the query message M4 is as follows:

```
         <rpc message-id=" 102"
                     xmlns= "urn: ietf: params: xml: ns: NET CONF :base: 1.0" >
                     <get-schema
                     xmlns="urn: ietf:params: xml: ns:yang: ietf-NETCONF-monitoring">
                       <identifer>bar</identifer>
                       <version>2008-06-0 1</version>
                     </get-schema>
                   </rpc>
```

The query message M4 includes a YANG schema named bar.

An example of a response message R4 for the query message M4 is as follows:

```
         <rpc-reply message-id="102"
                     xmlns= "urn: ietf: params: xml: ns: NET CONF :base: 1.0" >
                     <data
                     xmlns="urn: ietf:params: xml: ns:yang: ietf-NETCONF-monitoring">
                       module bar {
                         feature max-vpn-instances {
                           ext:license-type numeric; }
                         list network-instance {
                           ext:apply-feature max-vpn-instances {
                           replace max-elements 200 } } ...... }
                     </data>
                   </rpc-reply>
```

The response message R4 includes a YANG schema named bar and a feature named max-vpn-instances, and a license type of the feature is numeric.

Implementation 5: As mentioned above, the query message may be the RPC message based on the NETCONF protocol, or may be the message based on the HTTP or FTP protocol. For example, before purchasing a network device of a specific model, a user wants to know current feature information of the network device of the specific model and corresponding license information. Therefore, before the network management device establishes a NETCONF connection to the network device, the network management device may obtain the first mapping relationship from the network device or the server based on the HTTP or FTP protocol.

An example of the query message sent by the network management device is as follows:
GET HTTP 1.1 /product-name/serial/licenses/license-yang-mapping.json
Host: license-example.com
Accept: application/xml, application/json

License-example.com is a domain name of the server, and license-yang-mapping.json is a file name.

An example of a response message is as follows:

```
         HTTP/1.1 200 OK
            Date: Wed, 26 Feb 2020 20:33:30 GMT
            Server: example-server
            Cache-Control: no-cache
            Content-Type: application/json
            Content-Length: nnn
            {
              "ietf-yang-instance-data:instance-data-set": {
                 "name": "license-yang-mapping",
                 "content-schema": {
                   "module": "AAA-licenses"
                 },
                 "timestamp": "2021-07-06T14:00:38Z",
                 "description": [
                   "mapping between license and YANG"
                ],
                 "content-data":
         {
           "license": {
             "license-items": {
               "license-item": [
                  {
                    "name": "dhcpv6",
                    "description": "Dynamic Host Configuration Protocol for IPv6",
                    "enable": "enable",
                    "module-set": {
                      "name": "dhcpv6",
                      "module": [
                        {
                          "name": "AAA-dhcpv6",
                          "revision": "2020-03-09"
                        },
                        {
                          "name": "AAA-dhcpv6-relay",
                          "revision": "2020-03-09"
                        },
                        {
                          "name": "AAA-dhcpv6-deviations",
                          "revision": "2020-03-08"
                  } ] } },
                  {
                    "name": "evpn",
                    "description": "evpn attributes",
                    "enable": "disable",
                    "features": {
                      "feature": {
                        "module-name": "ietf-ethernet-segment",
                        "name": "ethernet-segment-pbb-params",
                        "type": "function",
                        "data-node-path":
"Ethernet-segments/Ethernet-segmenbpbb-parameters" } }
                  },
                  {
                    "name": "ospfv3",
                    "description": "Configure OSPFv3 config",
                    "expired-date": "2022-06-16",
                    "enable": "enable",
                    "module-set": {
                      "name": "ospfv3",
                      "module": [
                        {
                          "name": "AAA-ospfv3",
                          "revision": "2020-03-13"
                        },
                        {
                          "name": "AAA-ospfv3-type",
                          "revision": "2020-03-09"
                        },
                        {
                          "name": "AAA-ospfv3-srv6",
                          "revision": "2020-03-09"
                        },
                        {
                          "name": "AAA-ospfv3-deviations",
                          "revision": "2020-03-09" } ] } } ] } } } }
```

The response message indicates that the YANG model corresponding to the network device includes the following licenses: a license named dhcpv6, a license named evpn, and a license named ospfv3.

Description information of the license named dhcpv6 is a dynamic host configuration protocol based on IPv6. The license is enabled on the network device. A name of a module set controlled by the license is dhcpv6. The module set includes the following modules: a module whose name is AAA-dhcpv6 and whose revision is 2020-03-09, a module whose name is AAA-dhcpv6-relay and whose revision is 2020-03-09, and a module whose name is AAA-dhcpv6-deviations and whose revision is 2020-03-08.

Description information of the license named evpn is an evpn attribute. The license is not enabled on the network device. A name of a feature controlled by the license is ethernet-segment-pbb-params, a feature type is a function type, a name of an associated module is ietf-ethernet-segment, and XPath information of an associated data node is Ethernet-segments/Ethernet-segment/pbb-parameters.

Description information of the license named ospfv3 is to configure configure OSPFv3 config. An expired date of the license is 2022-06-16. The license is enabled on the network device. A name of a module set controlled by the license is ospfv3. The module set includes the following modules: a module whose name is AAA-ospfv3 and whose revision is 2020-03-13, a module whose name is AAA-ospfv3-type and whose revision is 2020-03-09, a module whose name is AAA-ospfv3-srv6 and whose revision is 2020-03-09, and a module whose name is AAA-ospfv3-deviations and whose revision is 2020-03-09.

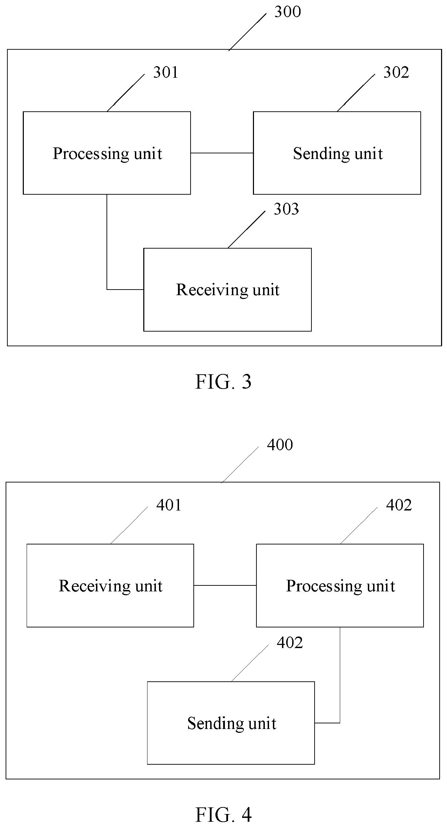

Refer to FIG. 3. An embodiment of this application further provides a query apparatus 300. The query apparatus 300 may implement a function of the network management device in the embodiment shown in FIG. 2. The query apparatus 300 includes a processing unit 301, a sending unit 302, and a receiving unit 303. The processing unit 301 is configured to implement S201 in the embodiment shown in FIG. 2, the sending unit 302 is configured to implement S202 in the embodiment shown in FIG. 2, and the receiving unit 303 is configured to implement S206 in the embodiment shown in FIG. 2.

Specifically, the processing unit 301 is configured to generate a query message, where the query message includes a query condition, and the query condition is used to determine a first mapping relationship between license license information and information about a YANG model object.

The sending unit 302 is configured to send the query message to a first device.

The receiving unit 303 is configured to receive a response message obtained by the first device based on the query condition, where the response message includes the first mapping relationship.

For a specific execution process, refer to the detailed descriptions of corresponding steps in the foregoing embodiment shown in FIG. 2. Details are not described herein again.

Refer to FIG. 4. An embodiment of this application further provides a query apparatus 400. The query apparatus 400 may implement a function of the first device in the embodiment shown in FIG. 2. The query apparatus 400 includes a receiving unit 401, a processing unit 402, and a sending unit 403. The receiving unit 401 is configured to implement S203 in the embodiment shown in FIG. 2. The processing unit 402 is configured to implement S204 in the embodiment shown in FIG. 2. The sending unit 403 is configured to implement S205 in the embodiment shown in FIG. 2.

Specifically, the receiving unit 401 is configured to receive a query message from a network device, where the query message includes a query condition.

The processing unit 402 is configured to obtain a first mapping relationship based on the query condition, where the first mapping relationship is a first mapping relationship between license license information and information about a YANG model object.

The sending unit 403 is configured to send a response message to the network device, where the response message includes the first mapping relationship.

For a specific execution process, refer to the detailed descriptions of corresponding steps in the foregoing embodiment shown in FIG. 2. Details are not described herein again.

It should be noted that, in embodiments of this application, division into the units is an example, and is merely logical function division. In actual implementation, another division manner may be used. Functional units in embodiments of this application may be integrated into one processing unit, or each of the units may exist alone physically, or two or more units are integrated into one unit. For example, in the foregoing embodiment, the obtaining unit and the processing unit may be a same unit or different units. The integrated unit may be implemented in a form of hardware, or may be implemented in a form of a software functional unit.

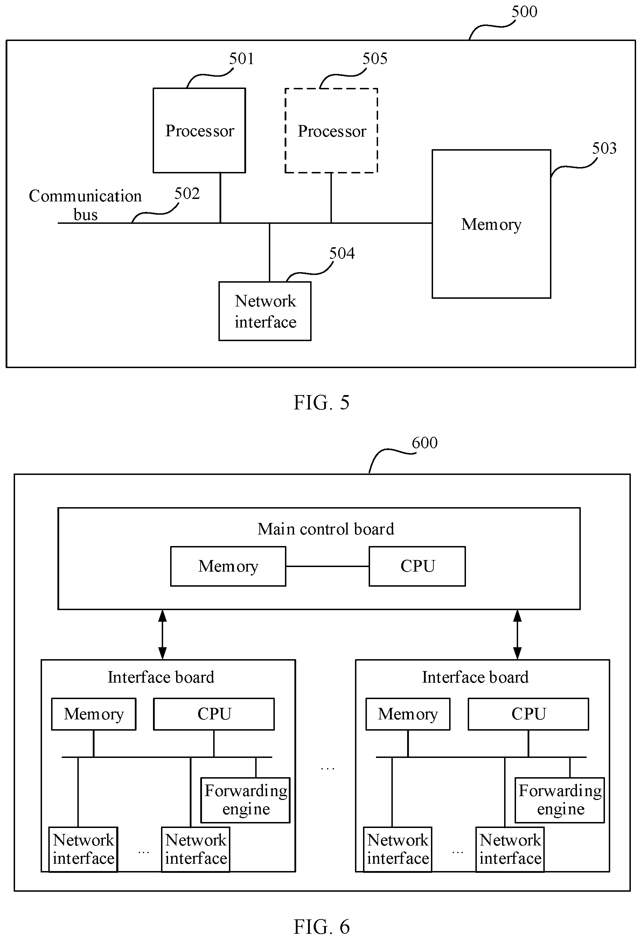

FIG. 5 is a schematic diagram of a structure of a device 500 according to an embodiment of this application. The foregoing query apparatus 300 or query apparatus 400 may be implemented by using the device shown in FIG. 5. Refer to FIG. 5. The device 500 includes at least one processor 501, a communication bus 502, and at least one network interface 504. Optionally, the device 500 may further include a memory 503.

The processor 501 may be a central processing unit (central processing unit, CPU), a network processor (network processor, NP), or a combination of the CPU and the NP. In an implementation, the processor 501 may be a traffic management (traffic management, TM) chip or hardware integrating an NP and a TM chip, and the TM chip or the hardware integrating the NP and the TM chip may perform, on a queue in the TM chip, a queue scheduling method provided in embodiments of this application. The processor 1010 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor may be configured to update or check a data packet, to implement a packet transmission method provided in embodiments of this application.

For example, when the network management device in FIG. 2 is implemented by using the device shown in FIG. 5, the processor may be configured to: generate a query message, send the query message to a first device through the network interface 504, and receive a response message that is obtained by the first device based on the query condition. When the first device in FIG. 2 is implemented by using the device shown in FIG. 5, the processor may be configured to: obtain a first mapping relationship based on the query condition, and send the response message to the network device through the network interface 504.

The communication bus 502 is configured to transmit information between the processor 501, the network interface 504, and the memory 503. The bus system 502 may be a peripheral component interconnect (peripheral component interconnect, PCI) bus, an extended industry standard architecture (extended industry standard architecture, EISA) bus, or the like. The bus system 502 may be classified into an address bus, a data bus, a control bus, and the like. In FIG. 5, only one thick line is used to represent the bus, but this does not mean that there is only one bus or only one type of bus.

The memory 503 may be a read-only memory (read-only memory, ROM) or another type of static storage device that can store static information and instructions. The memory 503 may alternatively be a random access memory (random access memory, RAM) or another type of dynamic storage device that can store information and instructions, or may be a read-only disc (compact disc read-only Memory, CD-ROM) or another optical disc storage, an optical disc storage (including a compact disc, a laser disc, an optical disc, a digital versatile disc, a Blu-ray disc, or the like), a magnetic disk storage medium, or another magnetic storage device, or any other medium that can carry or store expected program code in a form of instructions or a data structure and that can be accessed by a computer, but is not limited thereto. The memory 503 may exist independently, and is connected to the processor 501 through the communication bus 502. The memory 503 may alternatively be integrated with the processor 501.

Optionally, the memory 503 is configured to store program code or instructions for executing the solutions of this application, and the processor 501 controls the execution. The processor 501 is configured to execute the program code or the instructions stored in the memory 503. The program code may include one or more software modules. Optionally, the processor 501 may also store program code or instructions for executing the solutions of this application. In this case, the processor 501 does not need to read the program code or the instructions from the memory 503.

The network interface 504 may be an apparatus such as a transceiver, and is configured to communicate with another device or a communication network. The communication network may be the Ethernet, a radio access network (RAN), a wireless local area network (wireless local area network, WLAN), or the like. In this embodiment of this application, the network interface 504 may be configured to receive a packet sent by another node in a segment routing network, or send a packet to another node in a segment routing network. The network interface 504 may be an Ethernet (Ethernet) interface, a fast Ethernet (fast Ethernet, FE) interface, a gigabit Ethernet (gigabit Ethernet, GE) interface, or the like.

In specific implementation, in an embodiment, the device 500 may include a plurality of processors, for example, the processor 501 and a processor 505 shown in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

FIG. 6 is a schematic diagram of a structure of a device 600 according to an embodiment of this application. Any one or more of the network management device and the first device in FIG. 2 may be implemented by using the device shown in FIG. 6.

Refer to the schematic diagram of the structure of the device shown in FIG. 6. The device 600 includes a main control board and one or more interface boards. The main control board is in communication connection to the interface board. The main control board is also referred to as a main processing unit (main processing unit, MPU) or a route processing card (route processor card). The main control board includes a CPU and a memory. The main control board is responsible for controlling and managing each component in the device 600, and the control and management include route calculation, device management, and function maintenance. The interface board is also referred to as a line processing unit (line processing unit, LPU) or a line card (line card), and is configured to receive and send packets. In some embodiments, the main control board communicates with the interface board through a bus, or the interface boards communicate with each other through a bus. In some embodiments, the interface boards communicate with each other through a switch network board. In this case, the device 600 also includes the switch network board. The switch network board is in communication connection to the main control board and the interface boards. The switch network board is configured to forward data between the interface boards. The switch network board may also be referred to as a switch fabric unit (switch fabric unit, SFU). The interface board includes a CPU, a memory, a forwarding engine, and an interface card (interface card, IC). The interface card may include one or more network interfaces. The network interface may be an Ethernet interface, an FE interface, a GE interface, or the like. The CPU is in communication connection to the memory, the forwarding engine, and the interface card. The memory is configured to store a forwarding table. The forwarding engine is configured to: forward a received packet based on the forwarding table stored in the memory; and if a destination address of the received packet is an IP address of the device 600, send the packet to the CPU in the main control board or the interface board for processing; or if a destination address of the received packet is not an IP address of the device 600, search the forwarding table according to the destination address, and if a next hop and an outbound interface corresponding to the destination address are found in the forwarding table, forward the packet to the outbound interface corresponding to the destination address. The forwarding engine may be a network processor (network processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU in the interface board. In some embodiments, the CPU may also perform functions of the forwarding engine, such as implementing software forwarding based on a general-purpose CPU, so that no forwarding engine is required in the interface board. In some embodiments, the forwarding engine may be implemented by using an ASIC or a field programmable gate array (field programmable gate array, FPGA). In some embodiments, the memory that stores the forwarding table may alternatively be integrated into the forwarding engine, and is used as a part of the forwarding engine.

An embodiment of this application further provides a chip system, including a processor. The processor is coupled to a memory, the memory is configured to store a program or instructions, and when the program or the instructions are executed by the processor, the chip system is enabled to implement the query method provided in the embodiment shown in FIG. 2.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system-on-a-chip (system-on-a-chip, SoC), a CPU, an NP, a digital signal processor (digital signal processor, DSP), a microcontroller unit (micro controller unit, MCU), a programmable logic device (programmable logic device, PLD), or another integrated chip.

It should be understood that steps in the foregoing method embodiment may be completed by using a hardware integrated logic circuit or instructions in a form of software in the processor. The steps in the method disclosed with reference to embodiments of this application may be directly performed and completed by a hardware processor, or may be performed and completed by using a combination of hardware in the processor and a software module.

An embodiment of this application further provides a computer-readable storage medium, including instructions. When the instructions are run on a computer, the computer is enabled to perform the query method that is provided in the foregoing method embodiment and performed by the network management device or performed by the first device.

An embodiment of this application further provides a computer program product including instructions. When the computer program product runs on a computer, the computer is enabled to perform the query method that is provided in the foregoing method embodiment and performed by the network management device or performed by the first device.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way can be interchangeable in an appropriate circumstance, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical module division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be obtained based on actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A query method, wherein the method comprises:
generating, by a network management device, a query message, wherein the query message comprises a query condition, and the query condition is used to determine a first mapping relationship between license license information and information about a YANG model object;
sending, by the network management device, the query message to a first device; and
receiving, by the network management device, a response message obtained by the first device based on the query condition, wherein the response message comprises the first mapping relationship.

2. The method according to claim 1, wherein the query condition comprises the license information, and the query message is used by the first device to obtain the corresponding information about the YANG model object based on the license information.

3. The method according to claim 2, wherein the generating, by a network management device, a query message comprises:
generating, by the network management device, the query message based on the license information in response to obtaining alarm information that a license indicated by the license information expires.

4. The method according to claim 1, wherein the query condition comprises the information about the YANG model object, and the query message is used by the first device to obtain the license information based on the information about the YANG model object.

5. The method according to claim 2 or 4, wherein the generating, by a network management device, a query message comprises:
generating, by the network management device, the query message in response to a case in which the network management device receives a remote procedure call RPC reply message, wherein the PRC reply message indicates that a reason why the network management device fails to configure the YANG model object comprises that a license corresponding to the YANG model object is invalid.

6. The method according to claim 4 or 5, wherein after the response message is received, the method further comprises:
sending, by the network management device, an activation instruction to the first device in response to a case in which a license indicated by the license information is invalid, wherein the activation instruction instructs to activate the license.

7. The method according to claim 4, wherein the generating, by a network management device, a query message comprises:
generating, by the network management device, the query message in response to generating a PRC message, wherein the RPC message is used to configure the YANG model object.

8. The method according to claim 7, wherein after the response message is received, the method further comprises:
sending, by the network management device, the RPC message to the network device in response to a case in which a license indicated by the license information is in an activated state.

9. The method according to any one of claims 1 to 8, wherein the information about the YANG model object comprises an identifier of the YANG model object.

10. The method according to claim 9, wherein the information about the YANG model object further comprises one or more of the following:
feature feature information of the YANG model object and capability capability information of the YANG model object.

11. The method according to claim 1, wherein the query condition comprises a first query instruction and an identifier of a data node, the first query instruction is used to query capability information of the data node in YANG model system capabilities system-capabilities, and the capability information of the data node comprises the first mapping relationship.

12. The method according to claim 1, wherein the query condition comprises a second query instruction, the second query instruction is used to query a YANG library library, and the YANG library comprises the first mapping relationship.

13. The method according to claim 1, wherein the query condition comprises a third query instruction, the third query instruction is used to query schema schema information of the YANG model, and the schema information comprises the first mapping relationship.

14. The method according to claim 1, wherein the query condition comprises a file name, and the query message is used by the first device to obtain the first mapping relationship from a file corresponding to the file name.

15. The method according to claim 1, wherein the query condition comprises a device identifier of a network device carrying the YANG model object, the query message is used by the first device to obtain the first mapping relationship based on the device identifier and a second mapping relationship, and the second mapping relationship is a correspondence between the device identifier and the first mapping relationship.

16. The method according to any one of claims 1 to 15, wherein the license information comprises a license name.

17. The method according to claim 13, wherein the license information further comprises one or more of the following:
a license revision and license enable information.

18. The method according to any one of claims 1 to 17, wherein the YANG model object comprises one or more of the following:
a YANG data package package, a module set module set, a module module, and a data node data node.

19. A query method, wherein the method comprises:
receiving, by a first device, a query message from a network device, wherein the query message comprises a query condition;
obtaining, by the first device, a first mapping relationship based on the query condition, wherein the first mapping relationship is a mapping relationship between license license information and information about a YANG model object; and
sending, by the first device, a response message to the network device, wherein the response message comprises the first mapping relationship.

20. The method according to claim 19, wherein the query condition comprises the license information, and the obtaining, by the first device, a first mapping relationship based on the query condition comprises:
obtaining, by the first device, the corresponding information about the YANG model object based on the license information.

21. The method according to claim 19, wherein the query condition comprises the information about the YANG model object, and the obtaining, by the first device, a first mapping relationship based on the query condition comprises:
obtaining, by the first device, the license information based on the information about the YANG model object.

22. The method according to claim 19, wherein the query condition comprises a first query instruction and an identifier of a data node, and the first query instruction is used to query capability information of the data node in YANG model system capabilities system-capabilities; and
the obtaining, by the first device, a first mapping relationship based on the query condition comprises:
obtaining, by the first device, the capability information of the data node in the YANG system-capabilities based on the first query instruction and the identifier of the data node, wherein the capability information of the data node comprises the first mapping relationship.

23. The method according to claim 19, wherein the query condition comprises a second query instruction, and the second query instruction is used to query a YANG library library; and
the obtaining, by the first device, a first mapping relationship based on the query condition comprises:
obtaining, by the first device, the YANG library based on the second query instruction, wherein the YANG library comprises the first mapping relationship.

24. The method according to claim 19, wherein the query condition comprises a third query instruction, and the third query instruction is used to query schema schema information of the YANG model; and
the obtaining, by the first device, a first mapping relationship based on the query condition comprises:
obtaining, by the first device, the schema information based on the third query instruction, wherein the schema information comprises the first mapping relationship.

25. The method according to claim 19, wherein the query condition comprises a file name; and
the obtaining, by the first device, a first mapping relationship based on the query condition comprises:
obtaining, by the first device, the first mapping relationship from a file corresponding to the file name.

26. The method according to claim 19, wherein the query condition comprises a device identifier of a network device carrying the YANG model object; and
the obtaining, by the first device, a first mapping relationship based on the query condition comprises:
obtaining, by the first device, the first mapping relationship based on the device identifier and a second mapping relationship, wherein the second mapping relationship is a correspondence between the device identifier and the first mapping relationship.

27. The method according to any one of claims 19 to 26, wherein the information about the YANG model object comprises an identifier of the YANG model object.

28. The method according to claim 27, wherein the information about the YANG model object further comprises one or more of the following:
feature feature information of the YANG model object and capability capability information of the YANG model object.

29. The method according to any one of claims 19 to 28, wherein the license information comprises a license name.

30. The method according to claim 29, wherein the license information further comprises one or more of the following:
a license revision and license enable information.

31. The method according to any one of claims 19 to 30, wherein the YANG model object comprises one or more of the following:
a YANG data package package, a module set module-set, a module module, and a data node data node.

32. A query apparatus, used in a network management device, wherein the apparatus comprises:
a processing unit, configured to generate a query message, wherein the query message comprises a query condition, and the query condition is used to determine a first mapping relationship between license license information and information about a YANG model object;
a sending unit, configured to send the query message to a first device; and
a receiving unit, configured to receive a response message obtained by the first device based on the query condition, wherein the response message comprises the first mapping relationship.

33. The apparatus according to claim 32, wherein the query condition comprises the license information, and the query message is used by the first device to obtain the corresponding information about the YANG model object based on the license information.

34. The apparatus according to claim 33, wherein
the processing unit is configured to generate the query message based on the license information in response to obtaining alarm information that a license indicated by the license information expires.

35. The apparatus according to claim 32, wherein the query condition comprises the information about the YANG model object, and the query message is used by the first device to obtain the license information based on the information about the YANG model object.

36. The apparatus according to claim 33 or 35, wherein
the processing unit is configured to generate the query message in response to a case in which the network management device receives a remote procedure call RPC reply message, wherein the PRC reply message indicates that a reason why the network management device fails to configure the YANG model object comprises that a license corresponding to the YANG model object is invalid.

37. The apparatus according to claim 35 or 36, wherein
the sending unit is further configured to: after receiving the response message, send an activation instruction to the first device in response to a case in which a license indicated by the license information is invalid, wherein the activation instruction instructs to activate the license.

38. The apparatus according to claim 35, wherein
the processing unit is configured to generate the query message in response to generating a PRC message, wherein the RPC message is used to configure the YANG model object.

39. The apparatus according to claim 38, wherein
the sending unit is further configured to: after receiving the response message, send the RPC message to the network device in response to a case in which a license indicated by the license information is in an activated state.

40. The apparatus according to any one of claims 32 to 39, wherein the information about the YANG model object comprises an identifier of the YANG model object.

41. The apparatus according to claim 40, wherein the information about the YANG model object further comprises one or more of the following:
feature feature information of the YANG model object and capability capability information of the YANG model object.

42. The apparatus according to claim 32, wherein the query condition comprises a first query instruction and an identifier of a data node, the first query instruction is used to query capability information of the data node in YANG model system capabilities system-capabilities, and the capability information of the data node comprises the first mapping relationship.

43. The apparatus according to claim 32, wherein the query condition comprises a second query instruction, the second query instruction is used to query a YANG library library, and the YANG library comprises the first mapping relationship.

44. The apparatus according to claim 32, wherein the query condition comprises a third query instruction, the third query instruction is used to query schema schema information of the YANG model, and the schema information comprises the first mapping relationship.

45. The apparatus according to claim 32, wherein the query condition comprises a file name, and the query message is used by the first device to obtain the first mapping relationship from a file corresponding to the file name.

46. The apparatus according to claim 32, wherein the query condition comprises a device identifier of a network device carrying the YANG model object, the query message is used by the first device to obtain the first mapping relationship based on the device identifier and a second mapping relationship, and the second mapping relationship is a correspondence between the device identifier and the first mapping relationship.

47. A query apparatus, used in a first device, wherein the apparatus comprises:
a receiving unit, configured to receive a query message from a network device, wherein the query message comprises a query condition;
a processing unit, configured to obtain a first mapping relationship based on the query condition, wherein the first mapping relationship is a mapping relationship between license license information and information about a YANG model object; and
a sending unit, configured to send a response message to the network device, wherein the response message comprises the first mapping relationship.

48. The apparatus according to claim 47, wherein the query condition comprises the license information; and the processing unit is configured to obtain the corresponding information about the YANG model object based on the license information.

49. The apparatus according to claim 47, wherein the query condition comprises the information about the YANG model object; and
the processing unit is configured to obtain the license information based on the information about the YANG model object.

50. The apparatus according to claim 47, wherein the query condition comprises a first query instruction and an identifier of a data node, and the first query instruction is used to query capability information of the data node in YANG model system capabilities system-capabilities; and
the processing unit is configured to obtain the capability information of the data node in the YANG system-capabilities based on the first query instruction and the identifier of the data node, wherein the capability information of the data node comprises the first mapping relationship.

51. The apparatus according to claim 47, wherein the query condition comprises a second query instruction, and the second query instruction is used to query a YANG library library; and
the processing unit is configured to obtain the YANG library based on the second query instruction, wherein the YANG library comprises the first mapping relationship.

52. The apparatus according to claim 47, wherein the query condition comprises a third query instruction, and the third query instruction is used to query schema schema information of the YANG model; and
the processing unit is configured to obtain the schema information based on the third query instruction, wherein the schema information comprises the first mapping relationship.

53. The apparatus according to claim 47, wherein the query condition comprises a file name; and
the processing unit is configured to obtain the first mapping relationship from a file corresponding to the file name.

54. The apparatus according to claim 47, wherein the query condition comprises a device identifier of a network device carrying the YANG model object; and
the processing unit is configured to obtain the first mapping relationship based on the device identifier and a second mapping relationship, wherein the second mapping relationship is a correspondence between the device identifier and the first mapping relationship.

55. A network management device, wherein the network device comprises a processor chip and a memory, the memory is configured to store instructions or program code, and the processor chip is configured to invoke the instructions or program code from the memory and run the instructions or program code, to perform the query method according to any one of claims 1 to 18.

56. A device, wherein the device comprises a processor chip and a memory, the memory is configured to store instructions or program code, and the processor chip is configured to invoke the instructions or program code from the memory and run the instructions or program code, to perform the query method according to any one of claims 19 to 31.

57. A computer-readable storage medium, comprising instructions, a program, or code, wherein when the instructions, the program, or the code is executed on a computer, the computer is enabled to perform the query method according to any one of claims 1 to 31.
